# FASCICULE DE BREVET EUROPEEN

(11) **EP 3 336 439 B1**
(45) Date de publication et mention de la délivrance du brevet: **12.02.2020**
(21) Numéro de dépôt: 17207743.0
(22) Date de dépôt: 15.12.2017
(51) Int. Cl.: F24D 19/00, F24D 13/02, F24D 19/06, H05B 3/28, F24H 7/02

(54) **RADIATEUR ELECTRIQUE A COEUR DE CHAUFFE**
ELEKTRISCHER HEIZKÖRPER MIT HEIZKERN
ELECTRIC RADIATOR WITH HEATING CORE

(30) Priorité: 16.12.2016 FR 1662680
(43) Date de publication de la demande: 20.06.2018
(73) Titulaire: Texas De France, 13854 Aix en Provence (FR)
(72) Inventeur: BLOUIN, Philippe, 13510 EGUILLES (FR); VIENNET, Raphaël, 13100 Aix-En-Provence (FR)
(74) Mandataire: Roman, Alexis

(56) Documents cités:
- FR-A1- 2 710 733
- FR-A1- 2 737 833
- FR-A1- 3 054 024
- GB-A- 2 280 950

## Description

### Domaine technique de l'invention.

L'invention a pour objet un radiateur électrique à cœur de chauffe et son procédé de montage.

Elle concerne le domaine technique des appareils de chauffage électrique à inertie sèche utilisant un cœur de chauffe, et plus particulièrement le domaine technique des fixations d'un cœur de chauffe dans un radiateur électrique.

### État de la technique.

Les cœurs minéraux de chauffe sont bien connus de l'art antérieur et par exemple décrits dans les documents brevets FR 2.730.118 (TULIKIVI OY OSAKEYTIO), FR 2.964.820 (THERMOR PACIFIC) ou encore FR 2.992.054 (IMOTHEP CREATION).

Ces cœurs minéraux de chauffe sont souvent constitués de deux plaques de pierre naturelle ou reconstituée, entre lesquelles est inséré un moyen de chauffage électrique du type résistance électrique. Ces cœurs de chauffe offrent, outre une capacité thermique importante, une bonne isolation électrique de la résistance et permettent de dissiper la chaleur à l'environnement plus uniformément qu'une simple résistance électrique. Ils sont toutefois lourds et fragiles de sorte que des mesures particulières doivent être prises pour leur fixation dans un radiateur afin d'éviter de fissurer ou de casser la pierre lors du transport, de la manutention et/ou de la pose dudit radiateur.

Le document FR 2.964.820 (THERMOR PACIFIC) enseigne, dans le mode de réalisation de sa figure 1, d'installer le cœur de chauffe contre le capot ou châssis arrière du radiateur, sans que la structure de fixation dudit cœur ne soit décrite de manière plus précise. Dans le mode de réalisation de sa figure 2, ce document enseigne de glisser le cœur de chauffe dans un logement - ou cavité - aménagé dans le châssis arrière du radiateur. Aucun moyen permettant de limiter le déplacement du cœur de chauffe dans le logement n'est prévu de sorte que les risque de fissure ou de casse lors du transport et de la pose dudit radiateur sont élevés.

Le document FR 2710 733 A1 divulgue un radiateur électrique selon le préambule de la revendication 1.

Le document FR 2.992.054 (IMOTHEP CREATION) propose une solution permettant de remédier, en partie, aux insuffisances mentionnées au paragraphe précédent. Un cœur de chauffe de forme parallélépipédique est glissé dans un logement aménagé dans un radiateur électrique à éléments modulaires. Une paire de sabots en plastique permet de maintenir le coin inférieur droit et le coin inférieur gauche du cœur de chauffe. Une paire de cache, également en plastique, permet de maintenir le coin supérieur droit et le coin supérieur gauche du cœur de chauffe. Ainsi, le cœur de chauffe est maintenu au niveau de ses quatre coins de sorte que son déplacement dans le logement est limité.

La solution préconisée par ce document FR 2.992.054 n'est toutefois pas totalement satisfaisante. En premier lieu, la conception des sabots et des caches est relativement complexe, ce qui engendre des coûts de fabrication non négligeables. En deuxième lieu, le plastique utilisé pour les sabots et les caches est un matériau isolant thermiquement, de sorte qu'on peut constater un vieillissement prématuré de ces éléments lorsqu'ils sont chauffés par le cœur de chauffe et des surchauffes locales du cœur de chauffe. En troisième lieu, cette solution convient bien à un radiateur constitué d'éléments modulaires assemblés les uns à coté des autres et qui définissent un logement pour le cœur de chauffe, mais ne peut pas être appliquée à un radiateur comportant une façade avant fixée sur un châssis arrière qui est dépourvu de logement. En quatrième lieu, si le radiateur tombe à plat (ce qui arrive fréquemment lors d'opérations de manutention, de pose ou lors du transport), les risques de fissure ou de casse restent élevés. En effet, du fait de son poids et n'étant tenu que par ses quatre coins, le cœur de chauffe fléchit et risque soit de se fissurer et casser en deux, soit de casser au niveau de ses coins.

L'invention vise à remédier à cet état des choses. En particulier, un objectif de l'invention est de proposer un support de fixation du cœur de chauffe qui réduise davantage les risques de fissure et de cassure lors d'opérations de manutention, de pose et/ou lors du transport du radiateur.

Un autre objectif de l'invention est de proposer un support de fixation qui permette de préserver l'intégrité physique du cœur de chauffe dans le temps et qui limite les surchauffes locales dudit cœur.

Encore un objectif de l'invention est de proposer un support de fixation du cœur de chauffe qui puisse être rapidement et facilement installé dans un radiateur comportant une façade avant fixée sur un châssis arrière.

Un objectif supplémentaire de l'invention est de proposer un support de fixation du cœur de chauffe qui soit de conception simple et peu onéreuse

### Divulgation de l'invention.

La solution proposée par l'invention est un radiateur électrique comportant une façade avant et une façade arrière fixées sur une structure, lesdites façades et ladite structure délimitant un logement interne dans lequel est installé un cœur de chauffe adapté pour chauffer lesdites façades, ledit cœur présentant une face avant et une face arrière, lesquelles faces sont délimitées par des rebords longitudinaux et des rebords latéraux.

Le radiateur objet de l'invention est remarquable en ce que le cœur de chauffe est associé à un support, ledit support de fixation étant composé de la structure associée à une monture dans laquelle est inséré le cœur de chauffe, laquelle monture enchâsse les rebords longitudinaux et transversaux dudit cœur, ladite monture étant constituée d'un assemblage de profilés comportant des éléments de placage flexibles avec des propriétés élastiques adaptées pour maintenir le cœur de chauffe en position.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- la monture peut comporter :
   o deux traverses qui enchâssent les rebords longitudinaux du cœur de chauffe, lesquelles traverses ont chacune une section en U comportant une âme et deux ailes agencées en regard l'une de l'autre par rapport à ladite âme,
   o deux profilés verticaux qui enchâssent les rebords transversaux du cœur de chauffe, lesquels profilés ont chacun une section en U comportant une âme et deux ailes agencées en regard l'une de l'autre par rapport à ladite âme ;
- les profilés verticaux peuvent comporter des éléments de fixation adaptés pour les solidariser aux traverses, lesdites traverses étant équipées d'éléments de fixation au support ;
- chaque traverse peut enchâsser un rebord longitudinal sur la majeure partie de la longueur dudit rebord ;
- chaque profilé vertical peut enchâsser un rebord transversal sur la majeure partie de la longueur dudit rebord ;
- les éléments de placage peuvent être positionnés sur au moins une des ailes d'au moins une traverse de manière à plaquer la face arrière et/ou la face avant contre lesdites ailes ;
- les éléments de placage peuvent être positionnés sur l'âme d'au moins un profilé vertical de manière à bloquer latéralement le cœur de chauffe ;
- le support peut comporter en outre un châssis formé de profilés comportant une face intérieure sur laquelle se fixe la monture, et une face extérieure sur laquelle est installée la structure ;
- les traverses peuvent être fixées au châssis par l'intermédiaire des éléments de fixation ;
- la monture peut être réalisée dans un matériau thermiquement conducteur.

Un autre aspect de l'invention concerne un procédé de montage du radiateur électrique, comprenant les étapes consistant à :
- enchâsser un premier rebord transversal du cœur de chauffe avec un premier profilé vertical de forme générale en U,
- enchâsser un second rebord transversal du cœur de chauffe avec un second profilé vertical de forme générale en U, lequel second rebord est opposé au premier rebord transversal,
- enchâsser un premier rebord longitudinal du cœur de chauffe avec une première traverse de forme générale en U,
- enchâsser un second rebord longitudinal du cœur de chauffe avec une seconde traverse de forme générale en U, lequel second rebord est opposé au premier rebord longitudinal,
- fixer les profilés verticaux aux traverses par l'intermédiaire des éléments de fixation,
- fixer les profilés verticaux sur la structure de manière à former le support de fixation.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un radiateur conforme à l'invention,
- la figure 2 est une vue en perspective du radiateur de la figure 1, sans la façade avant,
- la figure 3 montre le cœur de chauffe de la figure 2, avec la monture installée autour dudit cœur de chauffe,
- la figure 4 est une vue éclatée du cœur de chauffe et de la monture de la figure 2, le châssis sur support de fixation étant représenté,
- la figure 5a est une vue en perspective de la traverse supérieure, laquelle fait partie de la monture de la figure 2,

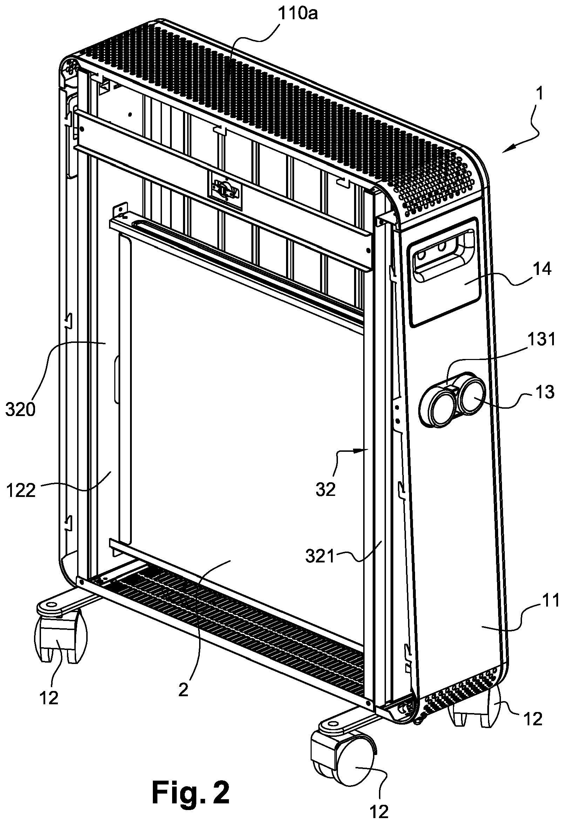

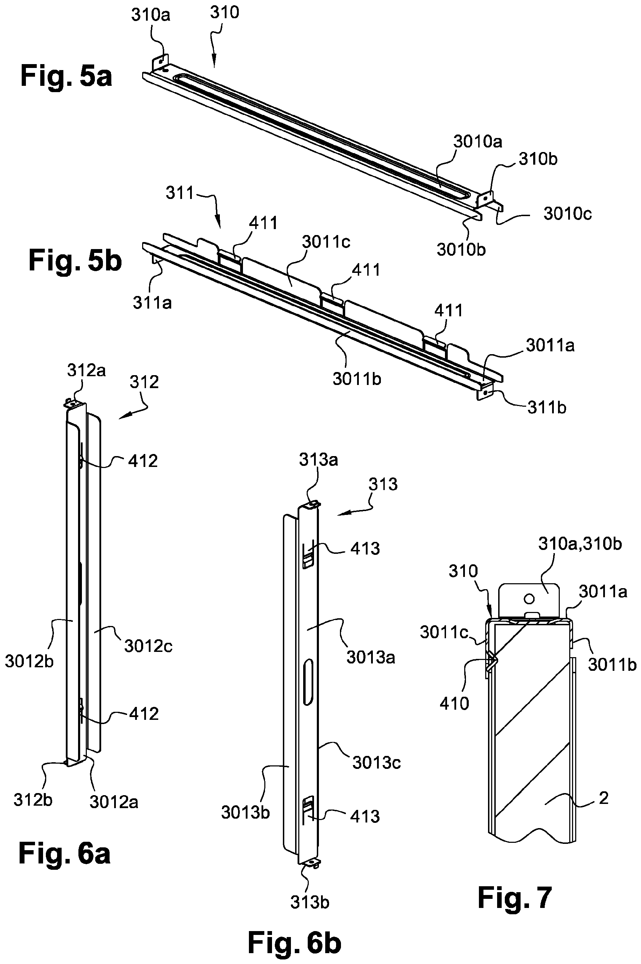

- la figure 5a est une vue en perspective de la traverse inférieure, laquelle fait partie de la monture de la figure 2,
- la figure 6a est une vue en perspective du profilé vertical gauche, lequel fait partie de la monture de la figure 2,
- la figure 6b est une vue en perspective du profilé vertical droit, lequel fait partie de la monture de la figure 2,
- la figure 7 est une vue partielle agrandie de la coupe selon A-A de l'assemblage cœur de chauffe-monture de la figure 2.

### Modes préférés de réalisation de l'invention.

Dans la suite de la description, les termes « *supérieur(e)*/*inférieur(e)* », *droit(e)*/*gauche* », « *haut*/*bas* », « *avant*/*arrière* » et de manière générale les termes désignant une référence spatiale, concernent la position dans laquelle les éléments apparaissent sur les figures annexées. Cette position peut toutefois être différente après la pose finale du radiateur.

Le radiateur objet de l'invention est un radiateur électrique à inertie sèche utilisant un cœur de chauffe.

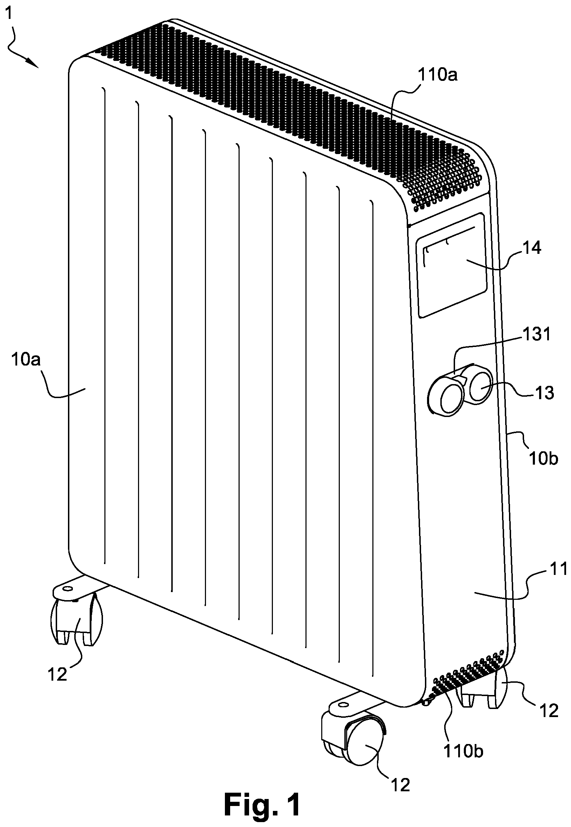

Sur les figures 1 et 2, le radiateur 1 comprend une façade avant 10a et une façade arrière 10b fixées sur une structure 32. Ce dernier peut, par exemple, être équipé de roulettes 12 afin que le radiateur 1 puisse être déplacé aisément dans la pièce à chauffer.

Les façades 10a, 10b consistent chacune en une tôle métallique ou une plaque de verre réalisée d'un seul tenant ou en plusieurs parties. Les façades 10a, 10b sont chauffées par un cœur de chauffe et leur rayonnement assure une réparation homogène de la chaleur dans la pièce à chauffer. Le cœur de chauffe est préférentiellement minéral ou en fonte, mais il peut également être dans d'autres matériaux, comme par exemple en aluminium, en faïence, en terre cuite...

Une carrosserie 11 peut également être installée de manière à habiller la structure 32 et par conséquent améliorer l'aspect esthétique du radiateur 1. Cette carrosserie 11 a également comme effet d'augmenter la rigidité de la structure 32 et ainsi rendre le radiateur 1 plus solide et moins sensible aux chutes et/ou chocs. Elle est préférentiellement en tôle mais peut être fabriquée dans n'importe quel autre matériau convenant à l'Homme du métier.

La carrosserie 11 consiste préférentiellement en une tôle métallique pliée et/ou emboutie et sur laquelle sont fixées les façades avant 10a et arrière 10b, par exemple par vissage ou rivetage. Comme illustré sur les figures 1 et 2, la carrosserie 11 peut être pourvue dans sa partie inférieure d'entrées d'air 110b qui contribuent, avec des entrées d'air 110a dans sa partie supérieure, à assurer une convection naturelle de la chaleur émise par le cœur de chauffe à l'intérieur du radiateur 1.

Sur les figures 1 et 2, un boîtier électronique de gestion 13 est installé sur la carrosserie 11, au niveau d'une réservation 131 prévue à cet effet. Ce boîtier 13 est adapté pour contrôler le fonctionnement du cœur de chauffe et permet notamment de contrôler la température de chauffage (thermostat) et/ou des plages de fonctionnement (programmateur).

Une poignée 14 (représentée sur les figures 1 et 2) peut également être installée sur la structure 32. Cette poignée 14 est adaptée pour que l'utilisateur puisse déplacer facilement le radiateur 1 dans toute la pièce à chauffer. Une réservation est réalisée dans la carrosserie 11 afin de permettre à l'utilisateur d'atteindre la poignée 14.

Les façades 10a, 10b et la structure 32 délimitent un logement interne 122 dans lequel est installé le cœur de chauffe 2. Ce cœur de chauffe 2 est du type décrit dans les documents brevets FR 2.730.118 et FR 2.992.054 précités. Sur l'exemple de réalisation schématisé sur la figure 12, le cœur de chauffe 2 a une forme parallélépipédique dont la longueur est par exemple comprise entre 300 mm et 750 mm, dont la hauteur par exemple comprise entre 150 mm et 350 mm et dont l'épaisseur par exemple comprise entre 15 mm et 40 mm. Son poids est compris entre 5 kg et 15 kg. Il présente une face avant 21 et une face arrière 22.

La face avant 21 et la face arrière 22 du cœur de chauffe 2 sont délimitées par des rebords longitudinaux 220, 221 et des rebords latéraux 230, 231 qui se rejoignent pour former des coins. Plus particulièrement, le rebord longitudinal inférieur 220 rejoint le rebord latéral droit 230 pour former le coin inférieur droit 240 et rejoint le rebord latéral gauche 231 pour former le coin inférieur gauche 241. De même, le rebord longitudinal supérieur 221 rejoint le rebord latéral droit 230 pour former le coin supérieur droit 242 et rejoint le rebord latéral gauche 231 pour former le coin supérieur gauche 243.

Le cœur de chauffe 2 est, par exemple, formé par deux plaques agencées en sandwich. Ces plaques peuvent être constituées de pierre naturelle telle le granite, le marbre, ou la stéatite. On peut également réaliser les plaques en brique réfractaire ou en pierre reconstituée. Ces deux plaques enserrent un moyen de chauffage électrique 25 qui se présente avantageusement sous la forme d'un fil résistif ou d'une feuille résistante chauffante qui couvre la majeure partie desdites plaques. Des connecteurs électriques qui s'étendent à l'extérieur du cœur de chauffe 2, permettent de connecter le moyen de chauffage électrique 25 à une alimentation électrique, via le boîtier électronique de gestion 13 précité. Le moyen de chauffage électrique 25 est adapté pour que la puissance de chauffage développée par le cœur de chauffe 2 soit avantageusement comprise entre 1000 W et 2000 W. Un joint en silicone permet de solidariser les plaques l'une à l'autre tout en assurant une isolation électrique de la résistance 25. Pour améliorer l'isolation électrique de l'ensemble, le moyen de chauffage électrique 25 peut être pris en sandwich entre deux feuilles réalisées dans un matériau non conducteur d'électricité tel que le mica, ces deux feuilles étant elles-mêmes prises en sandwich entre les deux plaques.

En se rapportant aux figures annexées, le cœur de chauffe 2 est associé à un support de fixation 3. Ce support de fixation 3 comprend une monture 31 dans laquelle est inséré le cœur de chauffe 2 et la structure 32 décrite précédemment. Cette structure 32 se présente, préférentiellement, sous la forme d'un châssis améliorant la rigidité du radiateur 1. Ce châssis 32 se compose de deux profilés 320, 321. Chacun de ces profilés 320, 321 comporte une face intérieure 320a, 321a sur laquelle se fixe la monture 31, et une face extérieure 320b, 321b sur laquelle est installée la carrosserie 11. Cette carrosserie 11 peut être solidarisée à la structure à chacune des faces extérieures 320b, 321b grâce à des moyens divers comme par exemple un système de vis, de rivets ou encore de soudures.

Chaque profilé 320, 321 est également équipé de moyens de fixation 3201, 3211 complémentaires des moyens de fixation 312a, 312b, 313a, 313b situés sur les profilés verticaux 312, 313. Ces moyens de fixation peuvent se présenter par exemple, sous la forme de vis, de soudures, ou encore de rivets. Ils permettent de solidariser la structure 32 à la monture 31 (décrite plus avant dans la description) de manière à former un support de fixation 3 en H.

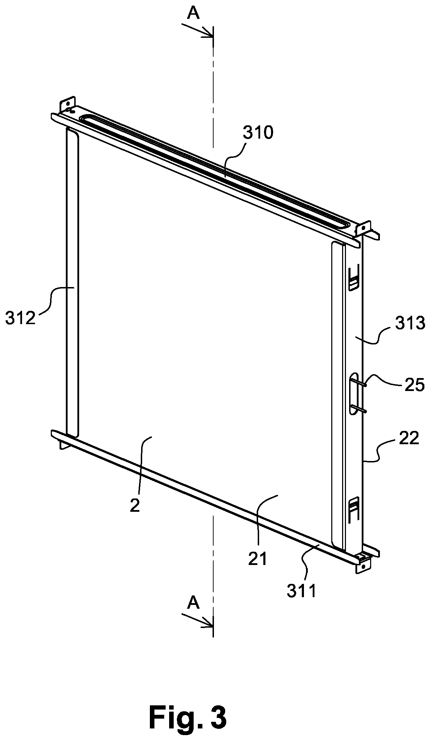

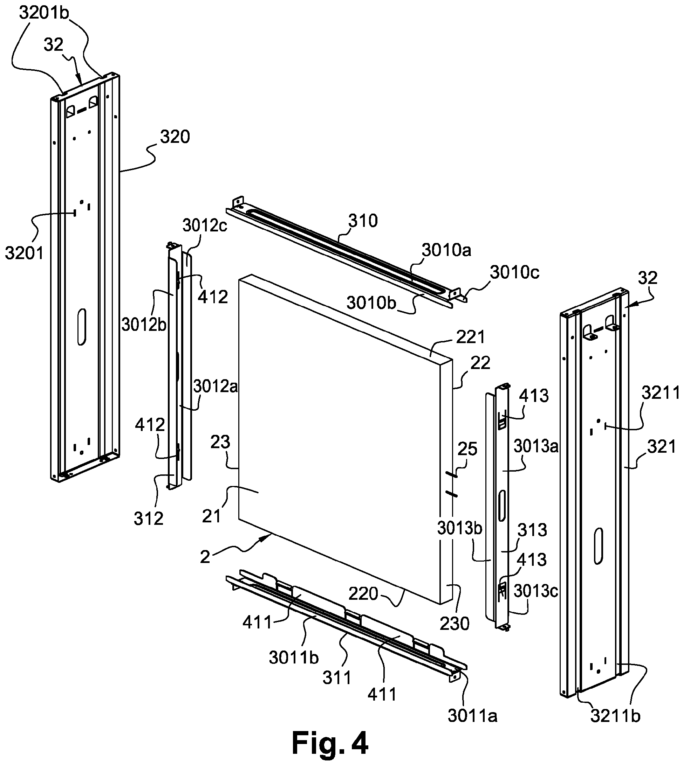

Un mode préféré de réalisation de la monture 31 est illustré en détail sur les figures 3 et 4. Elle est formée par un assemblage de profilés 310, 311, 312, 313 qui enchâssent les rebords longitudinaux 220, 221 et les rebords latéraux 230, 231 du cœur de chauffe 2.

Les profilés 310, 311, 312, 313 sont rigides de manière à éviter toute déformation intempestive de la monture lors du transport, de la manutention et/ou de la pose du radiateur 1, et part là même assurer un maintien en position optimal du cœur de chauffe 2 dans ladite monture. Ces profilés 310, 311, 312, 313 sont préférentiellement monobloc et par exemple obtenus par des tôles métalliques coupées, pliées et/ou embouties.

La monture 31 étant en contact avec le cœur de chauffe 2, il est avantageux que celle-ci ne provoque pas de surchauffes locales dudit cœur 2. Pour ce faire, les profilés 310, 311, 312, 313 sont préférentiellement réalisés dans un matériau thermiquement conducteur, par exemple en acier ou en aluminium. La chaleur émise par le cœur de chauffe 2 peut ainsi être convenablement évacuée par les profilés 310, 311, 312, 313, dans l'environnement ambiant.

Les figures 5a et 5b illustrent une première paire de profilés 310, 311 se présentant sous la forme de traverses agencées en regard l'une de l'autre. Elles sont, préférentiellement symétriques et ont chacune une forme générale en U qui leur permet chacune d'enchâsser un rebord longitudinal 220, 221 du cœur de chauffe 2. Plus particulièrement, le profilé supérieur 310 enchâsse le rebord longitudinal supérieur 221. Et le profilé inférieur 311 enchâsse le rebord longitudinal inférieur 220.

Sur les figures 2, 3 et 4, chaque traverse 310, 311 enchâsse - ou s'emboîte sur - un rebord longitudinal 220, 221 sur la majeure partie de la longueur dudit rebord. Par « *majeure partie de la longueur* »*,* on entend que le rebord longitudinal 220, 221 est enchâssé sur plus de la moitié de sa longueur, et avantageusement sur plus de 80 % de sa longueur et préférentiellement sur 100 % de sa longueur.

Dans le but de limiter les contacts entre les traverses 310, 311 et le cœur de chauffe 2, et donc améliorer l'évacuation des calories pour réduire les risques de surchauffe, on peut toutefois envisager que chaque traverse n'enchâsse que ponctuellement ou partiellement (sur moins de la moitié de sa longueur) un rebord longitudinal 220, 221. Cet enchâssement ponctuel ou partiel est préférentiellement réalisé dans la zone centrale du rebord longitudinal 220, 221 et/ou de part et d'autre de cette zone centrale.

Pour rigidifier davantage la monture 31 et pour en simplifier la conception, la longueur des traverses 310, 311 correspond avantageusement à celle du cœur de chauffe 2. Cette longueur peut toutefois être légèrement supérieure (par exemple de quelques millimètres) à celle du cœur de chauffe 2 pour faciliter la mise en place des traverses 310, 311. De même, la largueur des traverses 310, 311 correspond à celle du cœur de chauffe 2, en étant toutefois préférentiellement légèrement supérieure (par exemple de quelques millimètres) toujours dans le but de faciliter leur mise en place.

Sur les figures 2, 3 et 4, chaque traverse 310, 311 a une section en U qui présente : - une âme 3010a, 3011a qui s'étend dans la direction longitudinale du cœur de chauffe 2, parallèlement à un rebord longitudinal 220, 221 ; - et deux ailes 3010b-3010c, 3011b-3011c agencées en regard l'une de l'autre par rapport à ladite âme 3010a, 3011a. Les âmes 3010a, 3011a et leurs ailes respectives 3010b-3010c, 3011b-3011c, forment des sortes de gorges dans lesquelles s'enchâssent - ou s'emboîtent - les rebords longitudinaux 220, 221 du cœur de chauffe 2.

La longueur des âmes 3010a, 3011a correspond à celle des traverses 301, 311. Leur largeur correspond à celle des rebords longitudinaux 220, 221 et donc à l'épaisseur du cœur de chauffe 2. La largeur des âmes 3010a, 3011a peut toutefois être légèrement supérieure (par exemple de quelques millimètres) à celle des rebords longitudinaux 220, 221 pour faciliter l'emboîtage des traverses 310, 311. Aussi, on entend que l'enchâssement des rebords longitudinaux 220, 221 dans les traverses 310, 311 puisse se faire avec un certain jeu. L'épaisseur des âmes 3010a, 3011a est par exemple comprise entre 0.5 mm et 3 mm.

L'âme 3010a du profilé supérieur 310 recouvre et/ou vient en appui contre le rebord longitudinal supérieur 221 et l'âme 3011a du profilé inférieur 311 recouvre et/ou vient en appui contre le rebord longitudinal inférieur 220.

Les âmes 3010a, 3011a sont préférentiellement pleines pour rigidifier la monture 31, mais peuvent être ajourées, de manière continue ou discontinue, pour réduire la surface de contact avec les rebords longitudinaux 220, 221 et/ou pour faciliter l'évacuation des calories et diminuer les risques de surchauffe du cœur de chauffe 2 au niveau desdits rebords.

Pour chaque âme 3010a, 3011a, les ailes 3010b-3010c, 3011b-3011c sont symétriques, parallèles (ou sensiblement parallèles) entre elles et perpendiculaires (ou sensiblement perpendiculaires) à leur âme respective. Elles sont parallèles à la face avant 21 et à la face arrière 22 du corps de chauffe 2 et s'étendent dans la direction longitudinale dudit cœur. Les ailes 3010b-3010c, 3011b-3011c sont préférentiellement pleines pour rigidifier la monture 31, mais peuvent être ajourées, de manière continue ou discontinue, ou présentées des échancrures, afin de réduire la surface de contact avec la face avant 21 et la face arrière 22 et/ou pour faciliter l'évacuation des calories et diminuer les risques de surchauffe du cœur de chauffe 2 au niveau desdits faces.

La longueur des ailes 3010b-3010c, 3011b-3011c correspond sensiblement à celle des âmes 3010a, 3011a. Cette longueur peut toutefois être inférieure à celle des âmes 3010a, 3011a, par exemple de quelques millimètres, pour faciliter leur mise en forme par pliage ou emboutissage. Leur largeur est par exemple comprise entre 5 mm et 10 mm. Et leur épaisseur par exemple comprise entre 0.5 mm et 3 mm.

Comme cela apparaît sur les figures 3 et 4, les ailes 3010b-3010c, 3011b-3011c sont orientées vers le cœur de chauffe 2 et viennent coiffer une bordure longitudinale de la face avant 21 et une bordure longitudinale de la face arrière 22 dudit cœur. Plus particulièrement, l'aile arrière 3010b du profilé supérieur 310 coiffe la bordure supérieure de la face arrière 22 du cœur de chauffe 2. L'aile avant 3010c du profilé supérieur 310 coiffe la bordure supérieure de la face avant 21 du cœur de chauffe 2. L'aile arrière 3011b du profilé inférieur 311 coiffe la bordure inférieure de la face arrière 22 du cœur de chauffe 2. Et l'aile avant 3011c du profilé inférieur 311 coiffe la bordure inférieure de la face avant 21 du cœur de chauffe 2.

Dans le cas où les ailes 3010b-3010c, 3011b-3011c sont pleines, elles viennent coiffer les bordures longitudinales de la face avant 21 et de la face arrière 22 sur la majeure partie de leur longueur, c'est-à-dire sur plus de la moitié de sa longueur, et avantageusement sur plus de 80 % de sa longueur et préférentiellement sur 100 % de sa longueur. Dans le cas où les ailes 3010b-3010c, 3011b-3011c sont ajourées et/ou présentent des échancrures, elles peuvent ne venir coiffer ces bordures longitudinales que ponctuellement ou sur une partie seulement de leur longueur.

Les figures 6a et 6b illustrent une deuxième paire de profilés 312, 313 se présentant sous la forme de profilés verticaux agencés en regard l'un de l'autre. Ils sont, préférentiellement symétriques et ont chacun une forme générale en U qui leur permet chacun d'enchâsser un rebord transversal 230, 231 du cœur de chauffe 2. Plus particulièrement, le profilé supérieur 312 enchâsse le rebord transversal gauche 231. Et le profilé inférieur 313 enchâsse le rebord transversal droit 230.

Sur les figures 2, 3 et 4, chaque profilé vertical 312, 313 enchâsse - ou s'emboîte sur - un rebord transversal 230, 231 sur la majeure partie de la longueur dudit rebord. Par « *majeure partie de la longueur* », on entend que le rebord longitudinal 230, 231 est enchâssé sur plus de la moitié de sa longueur, et avantageusement sur plus de 80 % de sa longueur et préférentiellement sur 100 % de sa longueur.

Dans le but de limiter les contacts entre les profilés verticaux 312, 313 et le cœur de chauffe 2, et donc améliorer l'évacuation des calories pour réduire les risques de surchauffe, on peut toutefois envisager que chaque profilé 312, 313 n'enchâsse que ponctuellement ou partiellement (sur moins de la moitié de sa longueur) un rebord transversal 230, 231. Cet enchâssement ponctuel ou partiel est préférentiellement réalisé dans la zone centrale du rebord longitudinal 230, 231 et/ou de part et d'autre de cette zone centrale.

Pour rigidifier davantage la monture 31 et pour en simplifier la conception, la longueur des profilés 312, 313 correspond avantageusement à celle du cœur de chauffe 2. Cette longueur peut toutefois être légèrement supérieure (par exemple de quelques millimètres) à celle du cœur de chauffe 2 pour faciliter la mise en place des profilés 312, 313. De même, la largueur des profilés 312, 313 correspond à celle du cœur de chauffe 2, en étant toutefois préférentiellement légèrement supérieure (par exemple de quelques millimètres) toujours dans le but de faciliter leur mise en place.

Sur les figures 2, 3 et 4, chaque profilé 312, 313 a une section en U qui présente : - une âme 3012a, 3013a qui s'étend dans la direction transversale du cœur de chauffe 2, parallèlement à un rebord transversal 230, 231 ; - et deux ailes 3012b-3012c, 3013b-3013c agencées en regard l'une de l'autre par rapport à ladite âme 3012a, 3013a. Les âmes 3012a, 3012a et leurs ailes respectives 3012b-3012c, 3013b-3013c, forment des sortes de gorges dans lesquelles s'enchâssent - ou s'emboîtent - les rebords transversaux 230, 231 du cœur de chauffe 2.

La longueur des âmes 3012a, 3013a correspond à celle des profilés 312, 313. Leur largeur correspond à celle des rebords transversaux 230, 231 et donc à l'épaisseur du cœur de chauffe 2. La largeur des âmes 3012a, 3013a peut toutefois être légèrement supérieure (par exemple de quelques millimètres) à celle des rebords transversaux 230, 231 pour faciliter l'emboîtage des profilés 312, 313. Aussi, on entend que l'enchâssement des rebords transversaux 230, 231 dans les profilés 312, 313 puisse se faire avec un certain jeu. L'épaisseur des âmes 3012a, 3013a est par exemple comprise entre 0.5 mm et 3 mm.

L'âme 3012a du profilé vertical gauche 312 recouvre et/ou vient en appui contre le rebord transversal gauche 231 et l'âme 3013a du profilé inférieur 313 recouvre et/ou vient en appui contre le rebord transversal droit 230.

Les âmes 3012a, 3013a sont préférentiellement pleines pour rigidifier la monture 31, mais peuvent être ajourées, de manière continue ou discontinue, pour réduire la surface de contact avec les rebords transversaux 230, 231 et/ou pour faciliter l'évacuation des calories et diminuer les risques de surchauffe du cœur de chauffe 2 au niveau desdits rebords.

Pour chaque âme 3012a, 3013a, les ailes 3012b-3012c, 3013b-3013c sont symétriques, parallèles (ou sensiblement parallèles) entre elles et perpendiculaires (ou sensiblement perpendiculaires) à leur âme respective. Elles sont parallèles à la face avant 21 et à la face arrière 22 du corps de chauffe 2 et s'étendent dans la direction transversale dudit cœur. Les ailes 3012b-3012c, 3013b-3013c sont préférentiellement pleines pour rigidifier la monture 31, mais peuvent être ajourées, de manière continue ou discontinue, ou présentées des échancrures, afin de réduire la surface de contact avec la face avant 21 et la face arrière 22 et/ou pour faciliter l'évacuation des calories et diminuer les risques de surchauffe du cœur de chauffe 2 au niveau desdits faces.

La longueur des ailes 3012b-3012c, 3013b-3013c correspond sensiblement à celle des âmes 3012a, 3013a. Cette longueur peut toutefois être inférieure à celle des âmes 3012a, 3013a, par exemple de quelques millimètres, pour faciliter leur mise en forme par pliage ou emboutissage. Leur largeur est par exemple comprise entre 5 mm et 10 mm. Et leur épaisseur par exemple comprise entre 1 mm et 5 mm.

Comme cela apparaît sur les figures 3, 4, 5a, 5b, 6a, 6b, les ailes 3012b-3012c, 3013b-3013c sont orientées vers le cœur de chauffe 2 et viennent coiffer une bordure transversale de la face avant 21 et une bordure transversale de la face arrière 22 dudit cœur 2. Plus particulièrement, l'aile arrière 3012b du profilé vertical gauche 312 coiffe la bordure gauche de la face arrière 22 du cœur de chauffe 2. L'aile avant 3012c du profilé vertical gauche 312 coiffe la bordure gauche de la face avant 21 du cœur de chauffe 2. L'aile arrière 3013b du profilé vertical droit 313 coiffe la bordure droite de la face arrière 22 du cœur de chauffe 2. Et l'aile avant 3013c du profilé vertical droit 313 coiffe la bordure droite de la face avant 21 du cœur de chauffe 2.

Dans le cas où les ailes 3012b-3012c, 3013b-3013c sont pleines, elles viennent coiffer les bordures transversales de la face avant 21 et de la face arrière 22 sur la majeure partie de leur longueur, c'est-à-dire sur plus de la moitié de sa longueur, et avantageusement sur plus de 80 % de sa longueur et préférentiellement sur 100 % de sa longueur. Dans le cas où les ailes 3012b-3012c, 3013b-3013c sont ajourées et/ou présentent des échancrures, elles peuvent ne venir coiffer ces bordures longitudinales que ponctuellement ou sur une partie seulement de leur longueur.

Dans un mode de réalisation préféré, la monture 31 est réalisée en fixant les traverses 310, 311 aux profilés verticaux 312, 313. Ainsi, les profilés verticaux 312, 313 sont équipés sur chacune de leurs extrémités, d'éléments de fixation 312a, 312b, 313a, 313b. Ces éléments de fixation 312a, 312b, 313a, 313b pouvant se présenter par exemple, sous la forme de vis, de soudures, ou encore de rivets.

La monture 31 qui vient d'être décrite forme un encadrement qui recouvre un minimum de surface du cœur de chauffe 2 de façon à éviter toutes surchauffes locales de ce dernier. De plus, la majeure partie des surfaces de la face avant 21 et de la face arrière 22 n'est pas recouverte par les profilés 310, 311, 312, 313, ce qui garantie une très bonne évacuation des calories. En outre, l'enchâssant spécifique du cœur de chauffe 2 dans la monture, notamment au niveau de ces bords longitudinaux, permet de bien répartir les contraintes de poids dans ladite structure qui ne se déforme pas, même avec un cœur de chauffe de plusieurs kilos.

En cas de chute du radiateur 1, par exemple vers l'avant ou vers l'arrière, le risque majeur de rupture ou de cassure du cœur de chauffe 2 se situe au niveau du plan médian sagittal S qui est référencé sur les figures 8 et 12. Dans une configuration où seuls les quatre coins 240, 241, 242, 243 du cœur de chauffe 2 sont enchâssés (solution décrite dans le document FR 2.992.054 précité), la flexion dudit cœur est maximale dans le plan médian sagittal S de sorte qu'il peut se fissurer ou se casser dans ce plan. Et si le cœur de chauffe 2 ne se fissure pas ou ne se casse pas dans le plan S, ce sont ses coins 240, 241, 242, 243 qui sont les plus contraints et qui sont susceptibles de se rompre. Au contraire, grâce à la monture 31, le cœur de chauffe 2 est maintenant principalement retenu au niveau de son bord longitudinal supérieur 221 et de son bord longitudinal inférieur 220. La flexion du cœur de chauffe 2 est alors considérablement réduite dans le plan médian sagittal S, limitant fortement les risques de fissure ou de cassure. Et pour également limiter les risques de fissure ou de cassure dans le plan transversal T (lequel plan est référencé sur les figures 8 et 12), la monture 31 est avantageusement enchâsser le cœur de chauffe 2 au niveau de son rebord latéral droit 230 et de son rebord latéral gauche 231.

En tout état de cause, les âmes 3010a, 3011a des traverses 310, 311 permettent de bloquer les mouvements haut/bas du cœur de chauffe 2. Les âmes 3012a, 3013a des profilés verticaux 312, 313 permettent de limiter les mouvements latéraux (droite/gauche) du cœur de chauffe 2. Et les ailes 3010b-3010c, 3011b-3011c, 3012b-3012c, 3013b-3013b permettent de limiter les mouvements transversaux (avant/arrière) du cœur de chauffe 2. Le cœur de chauffe 2 est ainsi maintenu efficacement dans la monture.

De part leur conception et les matériaux minéraux utilisés, des cœurs de chauffe présentent des tolérances dimensionnelles importantes qui peuvent varier de plusieurs millimètres. De plus, les dimensions intrinsèques d'un cœur de chauffe ne sont pas régulières. L'épaisseur n'est pas constante et la longueur des rebords longitudinaux 220, 221 et/ou des rebords latéraux 230, 231 peut également variées. La longueur et/ou l'épaisseur du rebord longitudinal inférieur 220 est rarement égale à celle du rebord longitudinal supérieur 221. Il en est de même pour la longueur et/ou l'épaisseur du rebord latéral droit 230 et du rebord latéral gauche 231. Un emboîtage en force des profilés 310, 311, 312, 313 risque donc d'endommager le cœur de chauffe 2 au moment dudit l'emboîtage et risque également de créer des points de rupture en cas de choc (notamment au niveau des surépaisseurs). En outre, lorsque le cœur de chauffe 2 est en état de fonctionnement, il peut apparaître des dilatations différentielles entre ledit cœur 2 et la monture 31. Il est donc avantageux que les profilés 310, 311, 312, 313 aient des dimensions suffisantes en termes de longueur, largeur et épaisseur, pour pouvoir non seulement absorber ces dilatations différentielles, mais également s'emboîter facilement et sans risque sur des cœurs de chauffe dont les dimensions diffères d'un cœur de chauffe à l'autre et/ou diffères d'un rebord à l'autre. Toutefois, dans une telle configuration, le cœur de chauffe 2 risque de légèrement bouger dans la monture 31, notamment lors du transport et/ou de la manutention du radiateur 1. Ces légers déplacements ne sont pas susceptibles d'endommager le cœur de chauffe 2 mais peuvent générer du bruit qui peut être mal perçu, en terme de qualité notamment, par l'installateur et/ou l'utilisateur final.

Pour remédier à cela, et comme illustré sur les figures 4, 5a, 5b, 6a, 6b, 7, la monture 31 comprend des éléments 410, 411, 412, 413 permettant de plaquer le cœur de chauffe 2 au fond de ladite monture 31. Ils se présentent avantageusement chacun sous la forme d'une lame flexible - ou lame ressort - présentant des propriétés élastiques. Leur propriétés élastiques permettent d'une part d'enchâsser facilement les rebords 220, 221, 230, 231 du cœur de chauffe 2 lors de l'installation, et d'autre part d'absorber les chocs et déplacements éventuels lors de l'usage du radiateur 1, et plus particulièrement lors de son déplacement dans toute la pièce à chauffer.

Les éléments 410, 411, 412, 413 et les profilés 412, 413 et/ou traverses 410, 411 forment préférentiellement une pièce monobloc, par exemple obtenu par une tôle coupée, pliée et/ou emboutie. On utilise préférentiellement un matériau thermiquement conducteur, par exemple de l'acier ou l'aluminium.

Les éléments 410, 411, 412, 413 se présentent, de préférence, sous la forme d'une ligne d'appui, avantageusement sous la forme d'un rabat ou d'une pliure en V. Ce rabat ou cette pliure offre l'avantage d'avoir une surface de contact limitée avec le cœur de chauffe 2. Leur épaisseur est par exemple comprise entre 0,5 mm et 3 mm. Cette faible épaisseur permet de conférer aux éléments 410, 411, 412, 413 une bonne flexibilité et de bonnes propriétés élastiques.

Dans un mode de réalisation préféré, au moins une des traverses 310, 311 comporte des éléments de placage 410, 411. Sur la figure 5b, l'aile arrière 3011c de la traverse inférieure 311 est équipée d'éléments de placage 411. Cette configuration permet de plaquer la face avant 21 du cœur de chauffe 2 contre l'aile avant 3011b de la traverse inférieure 311. Pour un meilleur placage, la traverse supérieure 310 peut également être équipée d'un élément de placage 410 (figure 7) positionnée sur l'aile arrière 3010c. De la même manière, cet élément 410 permet de plaquer la face avant 21 du cœur de chauffe 2 contre l'aile avant 3010b de la traverse supérieure 310.

Ces éléments de placage 410, 411 réduisent les risques de déplacements avant/arrière du cœur de chauffe 2, ainsi que les bruits lors du transport et/ou de la manutention du radiateur 1. Ils permettent également d'absorber les déplacements brutaux du cœur de chauffe 2 en cas de chute ou de choc du radiateur 1. L'élasticité des éléments de placage 410, 411, permet d'accompagner le déplacement brutal du cœur de chauffe 2 jusqu'aux ailes avant 3010b, 3011b, sans provoquer la casse dudit cœur de chauffe 2. En outre, de part leur flexibilité et leurs propriétés élastiques, les éléments de placage 410, 411 sont adaptés pour absorber les dilatations différentielles entre le cœur de chauffe 2 et la monture 31.

Les profilés verticaux 312, 313 peuvent également comporter des éléments de placage 412, 413. Comme illustré sur les figures 6a, 6b, ils sont, préférentiellement positionnés sur l'âme 3012a, 3013a de chacun des profilés 312, 313. De la même manière qu'expliqué dans les paragraphes précédents, leur élasticité permet d'absorber les déplacements brutaux du cœur de chauffe et réduit les risques de déplacement transversal du cœur de chauffe 2.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de la portée de l'invention définie dans les revendications. En particulier :
- les ailes 3012b-3012c, 3013b-3013c des profilés verticaux peuvent également être équipées d'éléments de blocage,
- la structure 32 peut être réalisée en plastique ou dans un matériau composite à base de fibre de carbone par exemple,
- le cœur de chauffe 2 n'est pas nécessairement de forme parallélépipédique, mais peut avoir un ou plusieurs rebords courbes ou en ligne brisée,
- le cœur de chauffe 2 peut être monobloc et se présenter par exemple sous la forme d'un corps en céramique dans lequel est noyé le moyen de chauffage électrique,
- tous les profilés verticaux 312, 313 et traverses 310, 311 ne sont pas forcément équipés d'éléments de placage 410, 411, 412, 413.

## Revendications

1. Radiateur électrique comportant une façade avant (10a) et une façade arrière (10b) fixées sur une structure (32), lesdites façades (10a, 10b) et ladite structure (32) délimitant un logement interne (122) dans lequel est installé un cœur de chauffe (2) adapté pour chauffer lesdites façades (10a, 10b), ledit cœur (2) présentant une face avant (21) et une face arrière (22), lesquelles faces sont délimitées par des rebords longitudinaux (220, 221) et des rebords latéraux (230, 231), le cœur de chauffe (2) est associé à un support (3), ledit support de fixation (3) étant composé de la structure (32) associée à une monture (31) dans laquelle est inséré le cœur de chauffe (2), laquelle monture (31) enchâsse les rebords longitudinaux (220, 221) dudit cœur (2), ladite monture (31) étant constituée d'un assemblage de profilés (310, 311, 312, 313) comportant des éléments pour maintenir le cœur de chauffe (2) en position, **se caractérisant par le fait que** la monture (31) enchâsse en outre les rebords latéraux (230, 231) du cœur de chauffe (2), et que les éléments des profilés (310,311,312,313) pour maintenir le cœur de chauffe (2) en position sont des éléments de placage flexibles avec des propriétés élastiques adaptées pour maintenir le cœur de chauffe (2) en position.

2. Radiateur selon la revendication 1, **se caractérisant par le fait que** la monture (31) comporte :
- deux traverses (310, 311) qui enchâssent les rebords longitudinaux (220, 221) du cœur de chauffe (2), lesquelles traverses (310, 311) ont chacune une section en U comportant une âme (3010a, 3011a) et deux ailes (3010b-3010c, 3011b-3011c) agencées en regard l'une de l'autre par rapport à ladite âme (3010a, 3011a),
- deux profilés verticaux (312, 313) qui enchâssent les rebords latéraux (230, 231) du cœur de chauffe (2), lesquels profilés (312, 313) ont chacun une section en U comportant une âme (3012a, 3013a) et deux ailes (3012b-3012c, 3013b-3013c) agencées en regard l'une de l'autre par rapport à ladite âme (3012a, 3013a).

3. Radiateur selon la revendication 2, **se caractérisant par le fait que** les profilés verticaux (312, 313) comportent des éléments de fixation (312a, 312b, 313a, 313b) adaptés pour les solidariser aux traverses (310, 311), lesdites traverses (310, 311) étant équipées d'éléments de fixation au support (3).

4. Radiateur selon l'une des revendications 2 ou 3, **se caractérisant par le fait que** chaque traverse (310, 311) enchâsse un rebord longitudinal (220, 221) sur la majeure partie de la longueur dudit rebord.

5. Radiateur selon l'une des revendications 2 à 4, **se caractérisant par le fait que** chaque profilé vertical (312, 313) enchâsse un rebord latéral (230, 231) sur la majeure partie de la longueur dudit rebord.

6. Radiateur selon l'une des revendications 2 à 5, **se caractérisant par le fait que** les éléments de placage sont positionnés sur au moins une des ailes (3010b-3010c, 3011b-3011c) d'au moins une traverse (310, 311) de manière à plaquer la face arrière (22) et/ou la face avant (21) contre lesdites ailes (3010b-3010c, 3011b-3011c).

7. Radiateur selon l'une des revendications 2 à 6, **se caractérisant par le fait que** les éléments de placage sont positionnés sur l'âme (3012a, 3013a) d'au moins un profilé vertical (312, 313) de manière à bloquer latéralement le cœur de chauffe (2).

8. Radiateur selon l'une des revendications 1 à 7, **se caractérisant par le fait que** la structure (32) est formée de profilés (320, 321) comportant une face intérieure (320a, 321a) sur laquelle se fixe la monture (31), et une face extérieure (320b, 321b) sur laquelle est installée une carrosserie (11).

9. Radiateur selon la revendication 8 prise en combinaison avec la revendication 2, **se caractérisant par le fait que** les traverses (310, 311) sont fixées à la structure (32) par l'intermédiaire d'éléments de fixation (310a, 310b, 311a, 311b).

10. Radiateur selon l'une des revendications 1 à 9, **se caractérisant par le fait que** la monture (31) est réalisée dans un matériau thermiquement conducteur.

11. Procédé de montage d'un radiateur électrique (1) conforme à la revendication 3, comprenant les étapes consistant à :
- enchâsser un premier rebord latéral (231) du cœur de chauffe (2) avec un premier profilé vertical (312) de forme générale en U,
- enchâsser un second rebord latéral (230) du cœur de chauffe (2) avec un second profilé vertical (313) de forme générale en U, lequel second rebord (230) est opposé au premier rebord latéral (231),
- enchâsser un premier rebord longitudinal (221) du cœur de chauffe (2) avec une première traverse (310) de forme générale en U,
- enchâsser un second rebord longitudinal (220) du cœur de chauffe (2) avec une seconde traverse (311) de forme générale en U, lequel second rebord (220) est opposé au premier rebord longitudinal (221),
- fixer les profilés verticaux (312, 313) aux traverses (310, 311) par l'intermédiaire des éléments de fixation (312a,312b,313a,313b),
- fixer les profilés verticaux (312, 313) sur la structure (32) de manière à former le support de fixation (3).

## Patentansprüche

1. Elektrischer Heizkörper, aufweisend eine vordere Front (10a) und eine hintere Front (10b), die auf einer Struktur (32) befestigt sind, wobei die Fronten (10a, 10b) und die Struktur (32) eine innere Aufnahme (122) begrenzen, in welcher ein Heizkern (2) eingebaut ist, der geeignet ist, die Fronten (10a, 10b) zu heizen, wobei der Kern (2) eine vordere Fläche (21) und eine hintere Fläche (22) aufweist, wobei die Flächen durch Längskanten (220, 221) und Seitenkanten (230, 231) begrenzt sind, wobei der Heizkern (2) einem Halter (3) zugeordnet ist, wobei der Befestigungshalter (3) aus der Struktur (32) zusammengesetzt ist, die einer Fassung (31) zugeordnet ist, in welche der Heizkern (2) eingesetzt ist, wobei die Fassung (31) die Längskanten (220, 221) des Kerns (2) einfasst, wobei die Fassung (31) aus einer Anordnung von Profilen (310, 311, 312, 313) besteht, die Elemente aufweisen, um den Heizkern (2) in Position zu halten,
**dadurch gekennzeichnet, dass** die Fassung (31) ferner die Seitenkanten (230, 231) des Heizkerns (2) einfasst und dass die Elemente der Profile (310, 311, 312, 313), um den Heizkern (2) in Position zu halten, flexible Verkleidungselemente mit elastischen Eigenschaften sind, die geeignet sind, den Heizkern (2) in Position zu halten.

2. Heizkörper nach Anspruch 1, **dadurch gekennzeichnet, dass** die Fassung (31) aufweist:
- zwei Querträger (310, 311), die die Längskanten (220, 221) des Heizkerns (2) einfassen, wobei die Querträger (310, 311) jeweils einen U-förmigen Querschnitt haben, aufweisend eine Seele (3010a, 3011a) und zwei Flügel (3010b-3010c, 3011b-3011c), die in Bezug auf die Seele (3010a, 3011a) einander zugewandt ausgerichtet sind,
- zwei vertikale Profile (312, 313), die die Seitenkanten (230, 231) des Heizkerns (2) einfassen, wobei die Profile (312, 313) jeweils einen U-förmigen Querschnitt haben, aufweisend eine Seele (3012a, 3013a) und zwei Flügel (3012b-3012c, 3013b-3013c), die in Bezug auf die Seele (3012a, 3013a) einander zugewandt ausgerichtet sind.

3. Heizkörper nach Anspruch 2, **dadurch gekennzeichnet, dass** die vertikalen Profile (312, 313) Befestigungselemente (312a, 312b, 313a, 313b) aufweisen, die geeignet sind, um sie mit den Querträgern (310, 311) fest zu verbinden, wobei die Querträger (310, 311) mit Befestigungselementen am Halter (3) ausgerüstet sind.

4. Heizkörper nach einem der Ansprüche 2 oder 3, **dadurch gekennzeichnet, dass** jeder Querträger (310, 311) eine Längskante (220, 221) über den größten Teil der Länge der Kante einfasst.

5. Heizkörper nach einem der Ansprüche 2 bis 4, **dadurch gekennzeichnet, dass** jedes vertikale Profil (312, 313) eine Seitenkante (230, 231) über den größten Teil der Länge der Kante einfasst.

6. Heizkörper nach einem der Ansprüche 2 bis 5, **dadurch gekennzeichnet, dass** die Verkleidungselemente auf mindestens einem der Flügel (3010b-3010c, 3011b-3011c) mindestens eines Querträgers (310, 311) derart positioniert sind, dass die hintere Fläche (22) und/oder die vordere Fläche (21) gegen die Flügel (3010b-3010c, 3011b-3011c) gedrückt wird.

7. Heizkörper nach einem der Ansprüche 2 bis 6, **dadurch gekennzeichnet, dass** die Verkleidungselemente auf der Seele (3012a, 3013a) von mindestens einem vertikalen Profil (312, 313) derart positioniert sind, dass der Heizkern (2) seitlich blockiert wird.

8. Heizkörper nach einem der Ansprüche 1 bis 7, **dadurch gekennzeichnet, dass** die Struktur (32) von Profilen (320, 321) gebildet ist, die eine innere Fläche (320a, 321a) aufweisen, auf welcher die Fassung (31) befestigt wird, und eine äußere Fläche (320b, 321b), auf welcher eine Karosserie (11) angebracht ist.

9. Heizkörper nach Anspruch 8, herangezogen in Kombination mit Anspruch 2, **dadurch gekennzeichnet, dass** die Querträger (310, 311) an der Struktur (32) mithilfe von Befestigungselementen (310a, 310b, 311a, 311b) befestigt sind.

10. Heizkörper nach einem der Ansprüche 1 bis 9, **dadurch gekennzeichnet, dass** die Fassung (31) aus einem thermisch leitenden Material hergestellt ist.

11. Montageverfahren eines elektrischen Heizkörpers (1) nach Anspruch 3, umfassend die folgenden Schritte, die aus Folgendem bestehen:
- Einfassen einer ersten Seitenkante (231) des Heizkerns (2) mit einem ersten vertikalen allgemein U-förmigen Profil (312),
- Einfassen einer zweiten Seitenkante (230) des Heizkerns (2) mit einem zweiten vertikalen allgemein U-förmigen Profil (313), wobei die zweite Kante (230) der ersten Seitenkante (231) gegenüberliegt,
- Einfassen einer ersten Längskante (221) des Heizkerns (2) mit einem ersten allgemein U-förmigen Querträger (310),
- Einfassen einer zweiten Längskante (220) des Heizkerns (2) mit einem zweiten allgemein U-förmigen Querträger (311), wobei die zweite Kante (220) der ersten Längskante (221) gegenüberliegt,
- Befestigen der vertikalen Profile (312, 313) an den Querträgern (310, 311) mithilfe von Befestigungselementen (312a, 312b, 313a, 313b),
- Befestigen der vertikalen Profile (312, 313) derart auf der Struktur (32), dass der Befestigungshalter (3) gebildet wird.

## Claims

1. Electric radiator comprising a front facade (10a) and a rear facade (10b) attached to a structure (32), said facades (10a, 10b) and said structure (32) delimiting an internal cavity (122) in which there is installed a heating core (2) suitable for heating said facades (10a, 10b), said core (2) having a front face (21) and a rear face (22), which faces are delimited by longitudinal edges (220, 221) and lateral edges (230, 231), the heating core (2) is associated with a support (3), said attachment support (3) consisting of the structure (32) associated with a frame (31) into which the heating core (2) is inserted, which frame (31) encases the longitudinal edges (220, 221) of said core (2), said frame (31) consisting of an assembly of profiles (310, 311, 312, 313) comprising elements for holding the heating core (2) in position,
**characterized in that** the frame (31) also encases the lateral edges (230, 231) of the heating core (2), and **in that** the elements of the profiles (310, 311, 312, 313) for holding the heating core (2) in position are flexible clamping elements with elastic properties that are suitable for holding the heating core (2) in position.

2. Radiator according to Claim 1, **characterized in that** the frame (31) comprises:
- two crosspieces (310, 311) which encase the longitudinal edges (220, 221) of the heating core (2), which crosspieces (310, 311) each have a U-shaped cross section comprising a web (3010a, 3011a) and two flanges (3010b-3010c, 3011b-3011c) arranged facing one another relative to said web (3010a, 3011a),
- two vertical profiles (312, 313) which encase the lateral edges (230, 231) of the heating core (2), which profiles (312, 313) each have a U-shaped cross section comprising a web (3012a, 3013a) and two flanges (3012b-3012c, 3013b-3013c) arranged facing one another relative to said web (3012a, 3013a).

3. Radiator according to Claim 2, **characterized in that** the vertical profiles (312, 313) comprise attachment elements (312a, 312b, 313a, 313b) that are suitable for securing them to the crosspieces (310, 311), said crosspieces (310, 311) being equipped with elements for attachment to the support (3).

4. Radiator according to either of Claims 2 and 3, **characterized in that** each cross piece (310, 311) encases a longitudinal edge (220, 221) over the greater portion of the length of said edge.

5. Radiator according to one of Claims 2 to 4, **characterized in that** each vertical profile (312, 313) encases a lateral edge (230, 231) over the greater portion of the length of said edge.

6. Radiator according to one of Claims 2 to 5, **characterized in that** the clamping elements are positioned on at least one of the flanges (3010b-3010c, 3011b-3011c) of at least one crosspiece (310, 311) so as to clamp the rear face (22) and/or the front face (21) against said flanges (3010b-3010c, 3011b-3011c).

7. Radiator according to one of Claims 2 to 6, **characterized in that** the clamping elements are positioned on the web (3012a, 3013a) of at least one vertical profile (312, 313) so as to laterally immobilize the heating core (2).

8. Radiator according to one of Claims 1 to 7, **characterized in that** the structure (32) is formed of profiles (320, 321) comprising an inner face (320a, 321a) onto which the frame (31) is attached, and an outer face (320b, 321b) onto which a body (11) is installed.

9. Radiator according to Claim 8 in combination with Claim 2, **characterized in that** the crosspieces (310, 311) are attached to the structure (32) via the intermediary of attachment elements (310a, 310b, 311a, 311b).

10. Radiator according to one of Claims 1 to 9, **characterized in that** the frame (31) is made of a thermally conductive material.

11. Method for assembling an electric radiator (1) according to Claim 3, comprising the steps of:
- encasing a first lateral edge (231) of the heating core (2) with a generally U-shaped first vertical profile (312),
- encasing a second lateral edge (230) of the heating core (2) with a generally U-shaped second vertical profile (313), which second edge (230) is opposite the first lateral edge (231),
- encasing a first longitudinal edge (221) of the heating core (2) with a generally U-shaped first crosspiece (310),
- encasing a second longitudinal edge (220) of the heating core (2) with a generally U-shaped second crosspiece (311), which second edge (220) is opposite the first longitudinal edge (221),
- attaching the vertical profiles (312, 313) to the crosspieces (310, 311) by means of the attachment elements (312a, 312b, 313a, 313b),
- attaching the vertical profiles (312, 313) to the structure (32) so as to form the attachment support (3).
